**Europäisches Patentamt**

**European Patent Office**

**Office européen des brevets**

(11) Publication number: **0 153 613**
**B1**

# EUROPEAN PATENT SPECIFICATION

(45) Date of publication of patent specification: **26.04.89**

(21) Application number: **85101142.9**

(22) Date of filing: **04.02.85**

(51) Int. Cl.⁴: **E 05 B 49/00**

(54) **Passive keyless entry system.**

(30) Priority: **23.02.84 US 582677**
**09.04.84 US 597961**
**07.05.84 US 607887**

(43) Date of publication of application:
**04.09.85 Bulletin 85/36**

(45) Publication of the grant of the patent:
**26.04.89 Bulletin 89/17**

(84) Designated Contracting States:
**DE FR GB IT SE**

(56) References cited:
**GB-A-2 079 842**
**US-A-3 732 465**

(73) Proprietor: **IDENTITECH CORPORATION**
**101 Okner Parkway**
**Livingston New Jersey 07039 (US)**

(72) Inventor: **Anderson III, Philip Marron**
**c/o Allied Corporation P.O. Box 2245R**
**Morristown, NJ 07960 (US)**
Inventor: **Kearney, James Edward**
**c/o Allied Corporation P.O. Box 2245R**
**Morristown, NJ 07960 (US)**
Inventor: **Suchomel, Michael**
**c/o Allied Corporation P.O. Box 2245R**
**Morristown, NJ 07960 (US)**
Inventor: **Urbanski, Jeffrey Carman**
**c/o Allied Corporation P.O. Box 2245R**
**Morristown, NJ 07960 (US)**

(74) Representative: **Weber, Dieter, Dr. et al**
**Dr. Dieter Weber und Dipl.-Phys. Klaus Seiffert**
**Patentanwälte Gustav-Freytag-Strasse 25**
**Postfach 6145**
**D-6200 Wiesbaden 1 (DE)**

Courier Press, Leamington Spa, England.

## Description

Background of the invention

1. Field of the invention

This invention relates to a keyless entry system and an encoded marker used therein; and more particularly, to a keyless entry system that provides a person, bearing a personally encoded marker, convenient, reliable and quick access to a restricted area.

2. Description of the prior art

Keyless entry systems (e.g. US—A—3 732 465 and GB—A—2 079 842), upon which this invention has improved, are conventionally employed as convenience items with the additional capability of enhanced theft protection. There presently exists three main classes of such keyless entry systems including an infrared system, a radio frequency system and an electronic combination pad.

The infrared system consists of a hand held source module and an infrared sensing and decoder module positioned in a convenient location near the entrance of a restricted area. When the hand held source module is activated and correctly aimed at the sensor decoder, the frequency or pulse modulated code from the source module is decoded and compared to a preprogrammed code. If both codes match, the lock mechanism is electronically disengaged allowing access to the restricted area. This system has several faults, the most problemsome of which is presented by the difficulty encountered by the user in attempting to physically activate the source module while his hands are full or restricted. Once activated, the source module must be correctly aimed, making sure there are no obstructions between the source and sensing module. In foul weather and/or in dimly lit areas, the difficulties of aiming the source module and avoiding obstructions between it and the sensing mmdule are readily apparent. Such obstructions are oftentimes present as snow, dirt, ice and the like. Additionally, in bright light, the sensing module may be incapable of sensing the source module. Yet another fault is presented by the requirement that each of the source and sensing modules have an individual power supply, thereby reducing the reliability of the system.

The radio frequency (RF) system consists of a hand held source module and an RF receiver and decoder conveniently located near the restricted area's entrance. The RF system is similar to the infrared system in that the source module must be physically activated; however, the RF source module need not be aimed. When the source module is activated, the receiver transmits the coded RF signal to the decoder. Upon verification of the coded RF signal, the lock mechanism is disengaged, allowing access to the restricted area. The RF system has disadvantages similar to the infrared system in that the source module must be physically activated (a task made difficult when the user is wearing gloves) and requires its own power source. Still another drawback of the RF system is the tendency of RF interference, generated by motors, radio communicating devices or electrical storms which may jam the receiver or generate false signals that inadvertently disable the lock engaging mechanism.

The third class of keyless entry systems is the electronic combination pad. The electronic combination pad conists of a panel of approximately five buttons (keys) located in the vicinity of the restricted area's entrance. Each of these buttons are usually marked with different symbols. Alternately, the order of a geometric pattern serves the same purpose. When access to the restricted area's interior is desired, the depression of these buttons in a predefined sequence disengages the lock. One of the disadvantages of the electronic combination pad is presented by the requirement that the buttons be physically activated or depressed. This task is made difficult (1) when the user is wearing gloves, (2) when the keys are obstructed by snow, dirt or ice and (3) when the keypad must be operated in darkness or foul weather. Further, with electronic combination pads, there is a chance that the sequence or combination may be forgotten. As a result, keyless entry systems, though available as options in certain applications, have heretofore not gained widespread acceptance by manufacturers and consumers.

Summary of the invention

The present invention provides a keyless entry system that disengages the locking mechanism of an entrance to a restricted area, such as a motor vehicle door or the like, through use of a coded marker which requires no power or physical contact with the entrance. The marker is of such dimensions that it conveniently fits in a handbag or wallet and may be attached to a key chain. Surprisingly, the marker remains functional while enclosed within these articles (handbag/wallet) requiring only a momentary proximity of such articles to a sensor device disposed in the vicinity of the restricted area's entrance.

Generally stated, the keyless entry system of the invention comprises means for defining an interrogation zone. The system has a generating means, including an interrogating coil, for generating a magnetic field having a frequency band within the interrogation zone and a marker, responsive within the interrogation zone to undergo a substantial change in its effective magnetic permeability at preselected frequencies within the frequency band that provides the marker with signal identity. The marker comprises at least one strip of magnetostrictive, ferromagnetic material. The strip is adapted to be magnetically biased and thereby armed to resonate mechanically at a preselected frequency within the frequency band of the magnetic field. The system has a detecting means for detecting resonance of the marker within the interrogation zone and decoding means for comparing the detected marker resonance against a predefined code to verify parity therebetween. An actuating means connected to the decoding means enables the entry system in response to an indication of parity from the decoding means.

In addition to disengaging a locking mechanism, the keyless entry system of the invention may be electronically interlocked to a burgular alarm housed within the restricted area, thereby providing added security against theft. Further, a keyless entry system associated with the interior of a motor vehicle can advantageously be used to actuate electronically operated convenience options of the vehicle, such as, ignition interlock steering wheel tilt, mirror positions, seat adjustments, radio, suspension, etc. to personalized positions.

Brief description of the drawings

The invention will be more fully understood and further advantages will become apparent when reference is made to the following detailed description of the preferred embodiment of the invention and ·the accompanying drawings in which:

Figure 1 is a side view of a typical automobile door, including an integral side view mirror and center roof post;

Figure 2 is an enlarged perspective view of the side view mirror of Figure 1 incorporating the antenna of the present invention;

Figure 3 is an enlarged side view of the roof post of Figure 1 incorporating an alternative antenna of the present invention;

Figure 4 is a block diagram of the keyless entry system of the invention;

Figure 5 is an isometric view showing components of a marker adapted for use in the system of Figure 4;

Figure 6 is a graph showing the voltage induced by magnetomechanical energy exchange of a keyless entry system's marker over a preselected frequency range;

Figure 7 is a diagrammatic illustration of the system of Figure 4 installed in the entrance way of a restricted area; and

Figure 8 is a diagrammatic illustration of an alternate embodiment of the system of Figure 4 wherein the system is adapted to provide a motor vehicle with an ignition interlock in which the antenna of the invention is disposed proximate to the ignition switch.

Description of the preferred embodiments

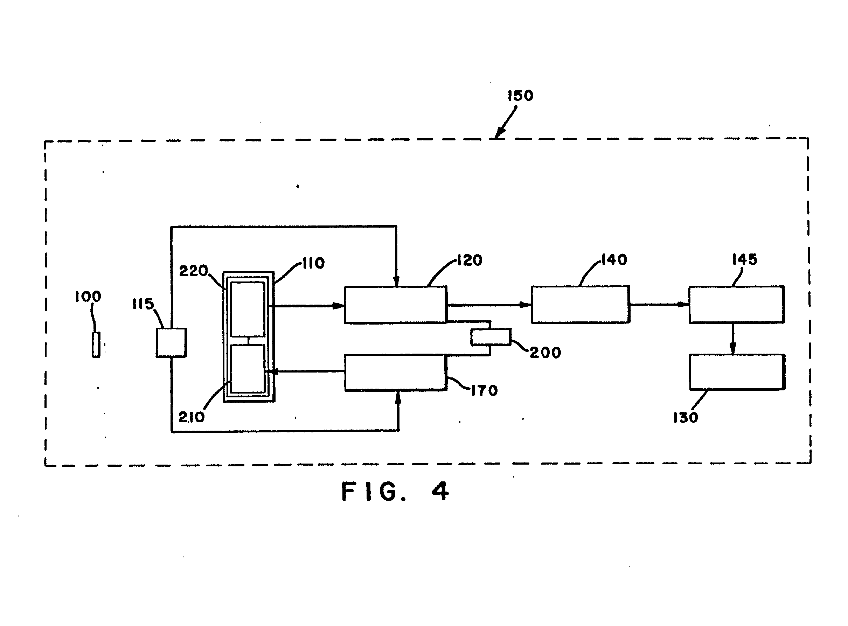

The components of the keyless entry system 150 (see Figure 4) can be fabricated in a number of diverse· sizes and configurations. As a consequence, the invention will be found to function with many varieties of keyless entry systems. For illustrative purposes, the invention is described in connection with an entry system in which the restricted area is the interior of a motor vehicle and the vehicle's locking mechanism is disengaged by a person bearing a coded marker to allow quick and convenient access to the interior of the vehicle. It will be readily appreciated that the invention can be employed for similar and yet diversified uses, such as keyless remote access to such restricted areas as houses, office buildings, site locations, elevator floors, file drawers, computer terminals and the like, and to actuation of electronic devices associated therewith to predetermined conditions. Accordingly, the invention is intended to encompass modifications of the preferred embodiment wherein keyless or remote entry is provided by coded markers.

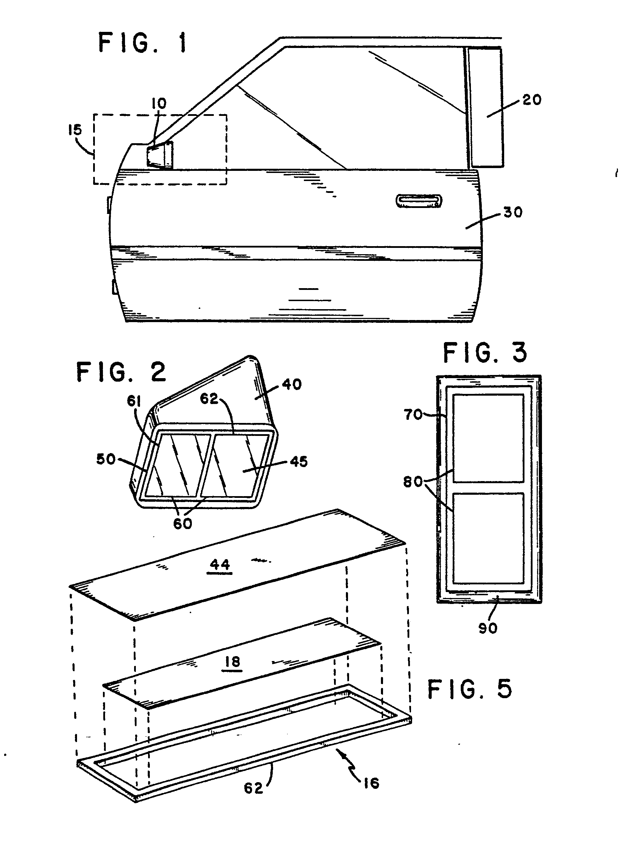

Referring to Figures 1, 2, 3 and 4 of the drawings, there is shown a keyless entry system 150. The marker 100 of the system 150 has means of generating a predetermined code. The keyless entry system 150 . has means of remotely interrogating the marker 100 and regenerating the predefined code contained therein. The detecting means 120 has means of determining whether the regenerated code is the correct code required to disengage the automobiles locking mechanism 130. A person bearing a coded marker 100, upon entering interrogation zone 15 provided by antenna 110, activates the keyless entry system 150 via proximity sensor 115. Sensor 115 can be any conventional proximity sensor adapted to undergo a change in electronic status in response to the presence of an object proximate thereto. Such objects can include the hand, keys or marker of the user. A variety of proximity sensors are commercially available, including those known as magnetic, capacitive, inductive, acoustic and the like. Capacitive proximity sensors detect a wide variety of objects and require minimal power. Accordingly, such sensors are preferred. The proximity sensor 115 requires minimal energy compared to the system 150. It activates system 150 only when an object is within the interrogation zone 15. This condition is assured by locating the proximity sensor 115 within the interrogation zone 15. Accordingly, its use eliminates the energy loss otherwise created by the requirement that system 150 continuously scan the interrogation zone 15. Upon being activated by proximity sensor 115, a generating means 170 interrogates the marker 100, causing it to reproduce the code contained therein. The detecting means 120 detects the code and transmits it to a decoding means 140 which compares the code against a predefined code to verify parity therebetween. An actuating means · ·145 enables keyless entry system 150 by disengaging the locking mechanism 130 in response to.an indication of parity from the decoding means 140.

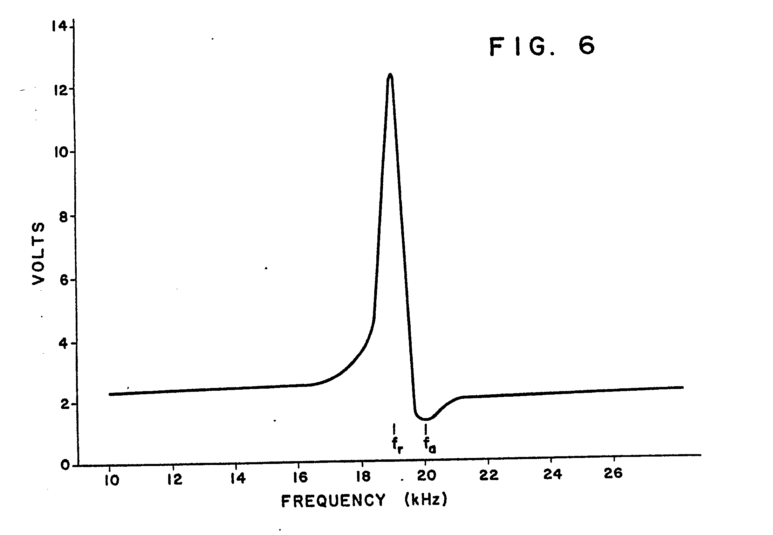

The marker 100 is designed in such a manner as to allow numerous codes to be represented. The marker 100, as shown in Figure 5, is comprised of at least one strip 18 of amorphous magnetostrictive· ferromagnetic material enclosed within a container 16 composed of a ferromagnetic filled plastic such as polyester filled with barium ferrite. Container 16 consists of two parts: a boat 62 and a cover 44. The container must be constructed in such a manner that strip 18 remains undamped or free to vibrate, upon being placed in the boat 62 and enclosed by the cover 44. This can be accomplished by leaving 1 millimeter clearance on all inside dimensions of container 16. Coded markers having the structure of marker 100 are visually indistinguishable from one another. The marker's configuration is such that it may readily be attached to a key chain or inserted in a handbag or wallet. More importantly, the marker 100 remains operational while it is enclosed in a handbag or wallet.

The marker 100 is composed of a magnetostrictive amorphous metal alloy in the form of a strip 18 having a first component composed of a composition consisting essentially of the formula $M_aN_bO_cX_dY_eZ_f$, where M is at least one of iron and cobalt, N is nickel, O is at least one of chromium and molybdenum, X is at least one of boron and phosphorus, Y is silicon, Z is carbon, "a"—"f" are in atom percent, "a" ranges from about 35—85 "b" ranges from about 0—45, "c" ranges from about 35—85, "d" ranges from about 5—22, "e" ranges from about 0—15 and "f" ranges from about 0—2, and the sum of d+e+f ranges from about 15—25.

The antenna system 110 is responsible for defining the interrogation zone 15. Preferably the antenna are conveniently located on the automobile. Figure 1 shows two possible locations for the antenna system 110 on an automobile. The integral side view mirror 10 on the driver's door 30 is ideally suited for the antenna system 110 since it is conveniently located. Figure 2 depicts an enlarged view of the integral side view mirror with the antenna system 110 installed. The antenna system 110 consists of two interrogation coils 60 and a receiving coil 50 mounted coplanar to each other. The integral side view mirror 10 consists of two main parts, the aerodynamic shell 40 and the mirror 45. The coplanar antenna system 110 can easily be installed directly behind the mirror 45 in the space provided by the aerodynamic shell 40. This arrangement allows the antenna system 110 to be completely concealed while at the same time providing a well defined interrogation zone 15.

In operation, the generating means 170 energizes the interrogation coils 60 producing a magnetic field of a predefined frequency spectrum. This magnetic field is distributed throughout the interrogation zone 15, thus serving to activate any marker 100 entering the interrogation zone 15. Once a marker 100 enters the interrogation zone 15, the receiving coil 50 accepts the coded signal generated by the activated marker 100 and transmits the coded signal to the detecting means 120. The decoding means 140 then verifies the code by comparing a predefined internal code with the detected code. Upon verification of parity, the actuating means 145 enables the entry system 150 to disengage the locking mechanism 130. The keyless entry system 150 is powered by the automobile's battery. However, the system 150 is energized only when the proximity sensor 115 is triggered. The keyless entry system 150 may be positioned in any convenient location within the automobile's interior. The system 150 requires no major alterations of the automobile, and thus enables the keyless entry system 150 to become an easily installed option.

In a preferred embodiment of the invention, interrogating coil 60 comprises a pair of antenna coils 61, 62 disposed adjacent to each other. Antenna coils 61, 62 are driven by the generator means 170 alternately at phase angles of 0° and 180° with respect to each other. This arrangement of the antenna coils 61, 62 permits detection of marker 100 independent of its orientation within interrogation zone 15.

The generating means 170 in the preferred embodiment is adapted to provide the interrogating coil 210 with a burst of sine wave frequencies that include each of the marker's preselected frequencies. There are several other possible generating means 170 outputs which alternatively can be used to provide the marker 100 with each of its preselected frequencies. Such alternative embodiments of the generating means 170 include (1) a frequency sweeping means adapted to sweep through each different preselected frequency of the marker 100, (2) a generating means adapted to provide the interrogating coil 210 with a pulse the width of which is equal to 1/(2fr), where fr is the preselected frequency, (3) a generating means adapted to provide the intgerrogating coil 210 with a burst of noise and (4) a generating means adapted to provide the interrogating coil 210 with a burst of sweeping sine wave frequency.

In operation the generating means 170 provides a burst of sine wave frequencies to the interrogating coil 210. After an interrogating signal of the burst type is completed, the marker 100 will continue to vibrate and thereby undergo damped oscillation at its resonance frequencies. The vibrating marker will cause a voltage to be induced in the receiving coil 220 at each resonance frequency. The detecting means 120 is synchronized with the generating means 170, via synchronizing means 200, in such a manner as to allow the resonant frequencies from the receiving coil 220 to be detected only after completion of the interrogating burst. The detecting means 120 determines the values of the resonant frequencies of the marker 100 and thus produces a frequency code. The decoding means 140 compares this frequency code to a predefined code and, upon verification of parity therebetween, enables the actuator means 145 to disengage the locking mechanism 130.

There are several alternate antenna system 110 locations which provide a variety of convenient interrogation zones. One such alternate location is depicted in Figure 1 as the center roof post 20. Many automobiles have nonmetallic decorative panels over the center roof post 20 in which the antenna system 110 can easily be installed, as depicted in Figure 3. The decorative panel 90 has the two interrogation coils 80 and a receiving coil 70 implanted on the hidden side, thus forming a concealed and convenient interrogation zone. A few other antenna system 110 locations include implantation of such systems directly in or on conveniently located window glass. With the current trend towards nonmetallic autobody parts,

4

such antenna systems 110 can be installed on any conveniently located metallic body part of the vehicle under a nonmetallic body part such as door panel 30.

The applications of the keyless entry system 150 need not be limited to locking mechanisms. With the deployment of personalized markers, any electronically actuated device may be adjusted to personal specification by correlating the personalized marker's code to the personal adjustment specifications. This does not restrict access to the automobile's interior since only a portion of the code is required to activate the locking mechanism and the remaining code can be designated to personal adjustments. A brief list of electronically actuated devices includes seat ajustments, radio settings, mirror positions, steering wheel tilt, suspension adjustments, etc.

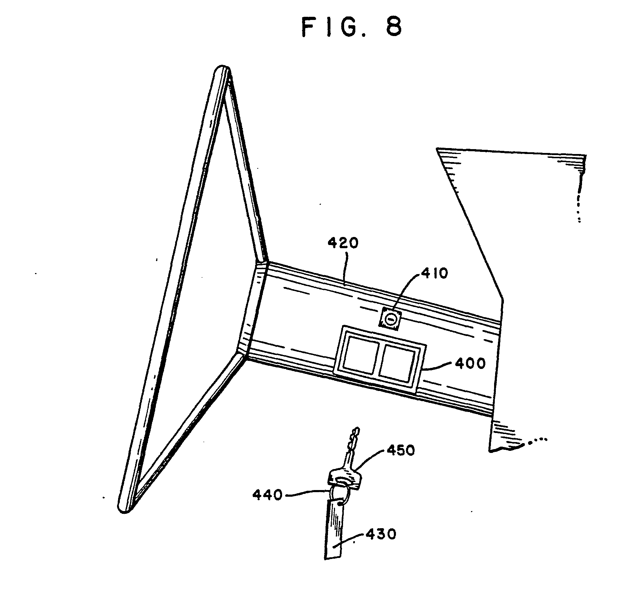

An additional application of the keyless entry system 150 is shown in Figure 8 wherein a system 150 is adapted to provide a motorized vehicle with an ignition interlock. The ignition interlock comprises antenna coils 400 of a system 150 disposed in the proximity of a motorized vehicle ignition switch. Figure 8 depicts the ignition of an automobile in which the ignition switch 410 is located on the steering column 420. The marker 430 of system 150 is attached to a keychain 440 which also contains the key 450 to the ignition switch 410. Thus upon insertion of the key 450 into the ignition switch 410 the marker 430 is automatically positioned proximate to the antenna coils 400. The ignition interlock in the preferred embodiment form requires that both the ignition key 450 and the marker 430 be present to enable the ignition system. The ignition interlock essentially locks the ignition in the off mode unless the aforementioned conditions are met. The means of locking the ignition can include an electrically operated mechanical lock or an electronic switch located in a well concealed location. The ignition interlock provides motorized vehicles with an additional mode of safety and security.

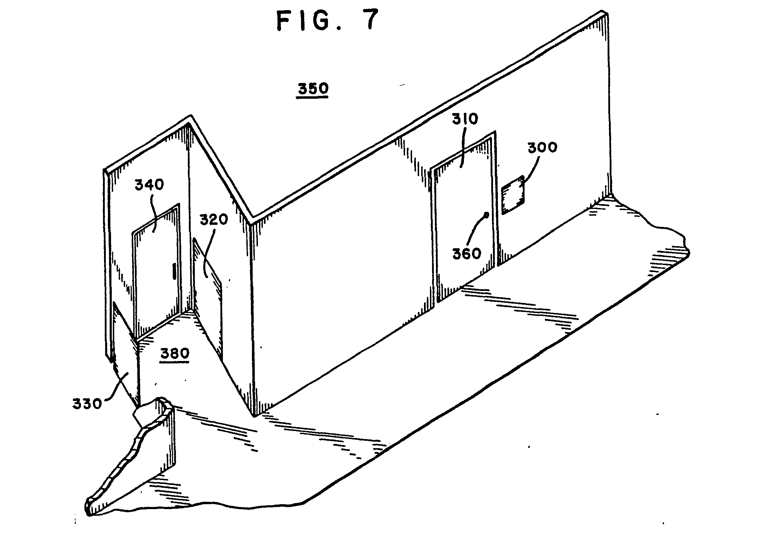

An alternative embodiment of the keyless entry system is shown in Figure 7 of the drawings in which two versions of the system are displayed in relation to a restricted area within a building. One version utilizes coplanar antenna coils 300 mounted on the wall of a corridor near the entrance 310 to a restricted area 350. A person bearing correctly coded marker 100 upon positioning the marker 100 proximate to the coplanar antenna coils 300, disengages the locking mechanism 360 of entrance 310 allowing access to the restricted area 350. The second version utilizes detecting coil 320 and generating coil 330 positioned on opposing sides of the entrance 340 to a restricted area 350. This version allows a person bearing a correctly coded marker 100 upon passing through the interrogation zone 380, defined by the detecting coil 320 and generating coil 330, to gain access to restricted area 350. The advantage of this version is that the marker 100 need not be specially positioned or more specifically the marker 100 is functional at all positions within the interrogation zone 380 formed by the area between the detecting coil 320 and the generating coil 330.

The keyless entry system 150 can be adapted to provide several interrogation zones 15 each of which comprise individual antenna systems 110 and proximity sensors 115. This configuration expands the capabilities of the system 150 by enabling a single electronic network of system 150 to operate a set of antenna systems 110. An example of this is in a motor vehicle in which three antenna systems 110 and proximity sensors 115 are installed and each of these are connected to a single electronic network. One set of antenna system 110 and proximity sensor 115 is located on the drivers door and is adapted to enable access to the motor vehicles interior. The second set is located in the vicinity of the motor vehicles trunk and is adapted to enable access to the trunks interior.

For example, one of the interrogation zones 15, established by the second set of antenna systems 110 and proximity sensors 115, can be disposed within the vehicles trunk to disable the locking mechanism thereof in response to the presence of the marker therein. This embodiment of the invention would not only facilitate access to the vehicles trunk but would prevent the trunk from being locked with the keys to the vehicle therein, the third set is positioned in the vicinity of the ignition switch of the motor vehicle and is adapted to perform as an ignition interlock. These sets of antenna systems 110 and proximity sensors 115 are activated individually in response to the presence of an object within one of the interrogation zones 15.

It has been found that markers containing strips of magnetostrictive amorphous material are particularly adapted to resonate mechanically at preselected frequencies of an incident magnetic field. While we do not wish to be bound by any theory, it is believed that, in markers of the aforesaid composition, direct magnetic coupling between an ac magnetic field and the marker 100 occurs by means of the following mechanism.

When a ferromagnetic material such as an amorphous metal ribbon is in a magnetic field (H), the ribbon's magnetic domains are caused to grow and/or rotate. This domain movement allows magnetic energy to be stored, in addition to a small amount of energy which is lost as heat. When the field is removed, the domains return to their original orientation releasing the stored magnetic energy, again minus a small amount of energy lost, as heat. Amorphous metals have high efficiency in this mode of energy storage. Since amorphous metals have no grain boundaries and have high resistivities, their energy losses are extraordinarily low.

When the ferromagnetic ribbon is magnetostrictive, an additional mode of energy storage is also possible. In the presence of a magnetic field, a magnetostrictive amorphous metal ribbon will have energy stored magnetically as described above but will also have energy stored mechanically via magnetostriction. This mechanical energy stored can be quantified as $U_e=(1/2)$ TS where T and S are the stress and strain on the ribbon. This additional mode of energy storage may be viewed as an increase in the effective magnetic permeability of the ribbon.

5

EP 0 153 613 B1

When an ac magnetic field and a dc field are introduced on the magnetostrictive ribbon (such as can be generated by ac and dc electric currents in a solenoid), energy is alternately stored and released with the frequency of the ac field. The magnetostrictive energy storage and release are maximal at the material's mechanical resonance frequency and minimal at its anti-resonance. This energy storage and release induces a voltage in a pickup coil via flux density changes in the ribbon. The flux density change may also be viewed as an increase in effective magnetic permeability at the resonant frequency and a decrease at anti-resonance, thus, in effect, increasing or decreasing, respectively, the magnetic coupling beween the driving solenoid and a second pickup solenoid. The voltage induced by the purely magnetic energy exchange is linear with frequency and the change in voltage with frequency is small over a limited frequency range. The voltage induced by the magnetomechanical energy exchange is also linear with frequency except near mechanical resonance. For a thin ribbon the mechanical resonance frequency is given by:

$$fr=(n/2L)\ (E/D)^{1/2}$$

where L, E and D are the length, Youngs modulus and mass density of the ribbon and n indicates the order of the harmonic. Therefore, when the frequency of the ac magnetic field is swept around $f_R$, a characteristic signature is generated. The resonance peak is closely followed by an anti-resonance peak shown in Figure 6. This anti-resonant peak occurs when the mechanical energy stored is near zero.

The transfer of magnetic and mechanical energy described above is called magnetomechanical coupling (MMC), and can be seen in all magnetostrictive materials. The efficiency of this energy transfer is proportional to the square of the magnetomechanical coupling factor (k), and is defined as the ratio of mechanical to magnetic energy. Phenomenologically, k is defined as

$$k=\sqrt{(1-fr^2/fa^2)}$$

where fr and fa are the resonant and anti-resonant frequencies described above. The larger the k factor, the greater the voltage difference between reasonant peak and anti-resonant valley. Also, the larger the k, the larger the difference in frequency between resonance and anti-resonance. Therefore, a large k facilitates the observation of the MMC phenomena.

Coupling factors are influenced in a given amorphous metal by the level of bias field present, the level of internal stress (or structural anisotropy) present and by the level and direction of any magnetic anisotropy. Annealing an amorphous metal relieves internal stresses, thus enhancing k. The structural anisotropy is small due to the ribbon's amorphous nature, also enhancing k. Annealing in a properly oriented magnetic field can significantly enhance coupling factors. Domain movement can be maximized when the ribbon has a magnetic anisotropy which is perpendicular to the interrogating field. Because of demagnetizing field effects, it is practical to interrogate the ribbon only along its length (this being the longest dimension). Therefore, the induced magnetic anisotropy should be transverse to the long dimension of the ribbon.

Maximum values of k are obtained by annealing the ribbon in a saturating magnetic field which is perpendicular to ribbon length (cross-field annealed). For a 1/2 inch ribbon, a field of a few hundred oersted is required. The optimum time and temperature of the anneal depends on the alloy employed. As an example, an iron-boron-silicon alloy yields an optimum coupling (k>0.90) when cross-field annealed at 400°C for 30 minutes. This anneal yields an optimum bias field of 1 Oe. For alloys having the compositions specified hereinabove, the annealing temperature ranges from about 300 to 450°C and the annealing time ranges from about 7 to 120 min.

The anneal also affects the bias field required to optimize k. For a given amorphous metal with a given anneal, the coupling depends strongly on the bias field. At zero and saturating fields, the coupling is zero (no resonant and anti-resonant phenomena). For a given alloy, an optimum bias field exists which yields a maximum k. For alloys having the compositions specified herein, the bias field required to optimize k ranges from about 0.1 to 20 Oe.

Even though most magnetostrictive materials will exhibit some MMC, amorphous metal yield extremely high coupling factors, and are, therefore highly preferred. As-cast amorphous metals yield higher k than most other magnetostrictive materials. No material has higher k than amorphous metals when cross-field annealed. Amorphous metals have high k because they have:

(a) low magnetic losses (no grain boundaries, high resistivity), (b) low structural and stress anisotropy, (c) reasonable magnetostriction and (d) can be given a beneficial magnetic anisotropy.

Amorphous metal alloys make good markers because (a) they have high k—even as-cast, (b) they are mechanically strong, tough and ductile, (c) they require low bias fields and (d) they have extremely high magnetostrictivity (they develop a large force upon resonating and are, therefore, more difficult to damp out). It will be appreciated, therefore, that the amorphous metals of which the marker of this invention is composed need not be annealed, but may be incorporated into the marker "as cast".

Examples of amorphous ferromagnetic marker compositions in atomic percent within the scope of the invention are set forth below in Table 1.

6

TABLE 1

| Alloy | As-cast k | Optimal annealed k |
|---|---|---|
| $Fe_{78}Si_9B_{13}$ | 0.35 | >0.90 |
| $Fe_{79}Si_5B_{16}$ | 0.31 | >0.90 |
| $Fe_{81}B_{13.5}Si_{3.5}C_2$ | 0.22 | >0.90 |
| $Fe_{67}Co_{18}B_{14}Si_1$ | 0.45 | 0.72 |
| $Fe_{40}Ni_{38}Mo_4B_{18}$ | 0.23 | 0.50 |

Examples of amorphous metals that have been found unsuitable for use as article surveillance system markers are set forth in Table 2.

TABLE 2
Composition percent

| | Example 1 | | Example 2 |
|---|---|---|---|
| Ni | at.% 71.67 <br> wt.% 84.40 | Ni | at.% 65.63 <br> wt.% 76.97 |
| Cr | at.% 5.75 <br> wt.% 6 | Cr | at.% 11.55 <br> wt.% 12.0 |
| B | at.% 12.68 <br> wt.% 2.75 | B | at.% 11.58 <br> wt.% 2.5 |
| Si | at.% 7.10 <br> wt.% 4 | Si | at.% 7.13 <br> wt.% 4 |
| Fe | at.% 2.23 <br> wt.% 2.5 | Fe | at.% 3.14 <br> wt.% 3.5 |
| C | at.% .25 <br> wt.% .06 | C | at.% .12 <br> wt.% .03 |
| P | at.% .032 <br> wt.% .02 | P | at.% — <br> wt.% — |
| S | at.% .031 <br> wt.% .02 | S | at.% — <br> wt.% — |
| Al | at.% .093 <br> wt.% .05 | Al | at.% — <br> wt.% — |
| Ti | at.% .052 <br> wt.% .05 | Ti | at.% — <br> wt.% — |
| Zr | at.% .027 <br> wt.% .05 | Zr | at.% — <br> wt.% — |
| Co | at.% .085 <br> wt.% .1 | Co | at.% .85 <br> wt.% 1.0 |

The amorphous ferromagnetic metal marker of the invention is prepared by cooling a melt of the desired composition at a rate of at least about $10^5$°C/sec, employing metal alloy quenching techniques well-known to the amorphous metal alloy art; see, e.g., U.S. Patent 3,856,513 to Chen et al. The purity of all compositions is that found in normal commercial practice.

A variety of techniques are available for fabricating continuous ribbon, wire, sheet, etc. Typically, a particular composition is selected, powders or granules of the requisite elements in the desired portions are melted and homogenized, and the molten alloy is rapidly quenched on a chill surface, such as a rapidly rotating metal cylinder.

## EP 0 153 613 B1

Under these quenching conditions, a metastable, homogeneous, ductile material is obtained. The metastable material may be amorphous, in which case there is no long-range order. X-ray diffraction patterns of amorphous metal alloys show only a diffuse halo, similar to that observed for inorganic oxide glasses. Such amorphous alloys must be at least 50% amorphous to be sufficiently ductile to permit subsequent handling, such as stamping complex marker shapes from ribbons of the alloys without degradation of the marker's signal identity. Preferably, the amorphous metal marker must be at least 80% amorphous to attain superior ductility.

The metastable phase may also be a solid solution of the constituent elements. In the case of the marker of the invention, such metastable, solid solution phases are not ordinarily produced under conventional processing techniques employed in the art of fabricating crystalline alloys. X-ray diffraction patterns of the solid solution alloys show the sharp diffraction peaks characteristic of crystalline alloys, with some broadening of the peaks due to desired fine-grained size of crystallites. Such metastable materials are also ductile when produced under the conditions described above.

## Claims

1. A keyless entry system, comprising:
(a) means for defining an interrogation zone;
(b) generating means for generating a magnetic field having a frequency band within said interrogating zone said generating means including an interrogating coil;
(c) a marker responsive within at least one of said interrogation zones to undergo a substantial change in its effective magnetic permeability at a preselected frequency within said frequency band that provides the marker with signal identity, said marker comprising at least one strip of magnetostrictive, ferromagnetic material, said strip being adapted to be magnetically biased and thereby armed to resonate mechanically at said presselected frequency within the frequency band of said magnetic field;
(d) detecting means for detecting resonance of said marker within said interrogation zones;
(e) decoding means for comparing said detected marker resonance against a predefined code to verify parity therebetween; and
(f) actuating means for enabling said entry system in response to an indication of parity from said decoding means.

2. A keyless entry system as recited in Claim 1, further comprising an activating means for detecting the presence of an object within said interrogation zones and activating said generating means in response to the presence of said object.

3. A keyless entry system as recited in Claim 2, wherein said activating means comprises a proximity sensor disposed in the vicinity of said interrogation zone and adapted to undergo a change in electronic status in response to the presence of an object proximate thereto, and switching means for energizing said generating means in response to said change in electronic status.

4. A keyless entry system as recited in Claim 1, wherein each of said generating and said detecting means comprises at least one antenna coil.

5. A keyless entry system as recited in Claim 4, wherein said antenna coils of said generating and said detecting means are coplanar.

6. A keyless entry system as recited in Claim 5, wherein said generating means comprises a pair of antenna coils disposed adjacent to each other and driven by said generating means alternately at phase angles of 0° and 180° with respect to each other.

7. A keyless entry system as recited in claim 4, wherein said system is disposed in a motor vehicle and said antenna coils of said generating and detecting means are disposed in a side rear view mirror of said vehicle.

8. A keyless entry system comprising:
(a) means for defining a plurality of interrogation zones;
(b) generating means associated with each of said interrogation zones for generating therein a magnetic field having a frequency band, said generating means including a plurality of interrogating coils, at least one of said interrogating coils being disposed within each of said interrogation zones;
(c) a marker responsive within at least one of said interrogation zones to undergo a substantial change in its effective magnetic permeability at a preselected frequency within said frequency band that provides the marker with signal identity, said marker comprising at least one strip of magnetostrictive, ferromagnetic material, said strip being adapted to be magnetically biased and thereby armed to resonate mechanically at said preselected frequency within the frequency band of said magnetic field;
(d) a plurality of detecting means for detecting resonance of said marker within said interrogation zones;
(e) decoding means for comparing said detected marker resonance against a predefined code to verify parity therebetween; and
(f) a plurality of actuating means for enabling a plurality of electronic devices associated with said entry system in response to an indication of parity from said decoding means.

9. A keyless entry system as recited in Claim 8, further comprising a plurality of activating means for

# EP 0 153 613 B1

detecting the presence of an object within each of said interrogation zones and activating said generating means in response to the presence of said object.

10. A keyless entry system as recited in Claim 9, wherein each of said activating means comprises a proximity sensor disposed in the vicinity of a different one of said interrogation zones and adapted to undergo a change in electronic status in response to the presence of an object proximate thereto, and switching means for energizing said generating means in response to said change in electronic status.

**Patentansprüche**

1. Schlüsselloses Zugangssystem mit:
a) Mitteln, welche eine Abfragezone definieren;
b) einer Erzeugungseinrichtung, um in der Abfragezone ein Magnetfeld in einem Frequenzband zu erzeugen, wobei die Erzeugungseinrichtung eine Abfragespule aufweist;
c) einem Anzeigeelement, welches in zumindest einer der Abfragezonen anspricht, so daß es einer beträchtlichen Veränderung seiner effektiven magnetischen Permeabilität bei einer vorgewählten Frequenz innerhalb des Frequenzbandes unterliegt, was das Anzeigeelement mit einem Kennsignal versieht, wobei das Anziegeelement zumindest einen Streifen aus magnetostriktivem, ferromagnetischem Material aufweist, und der Streifen so ausgelegt ist, daß er magnetisch vorgespannt und dadurch bereit gemacht werden kann, bei der vorgewählten Frequenz innerhalb des Frequenzbandes des Magnetfeldes mechanisch in Resonanz zu kommen;
d) einer Erfassungseinrichtung zum Erfassen der Resonanz des Anzeigeelementes innerhalb der Abfragezonen;
e) einer Entschlüsselungseinrichtung zum Vergleich der erfaßten Anzeigeelementresonanz gegenüber einer zuvor festgelegten Verschlüsselung, um die Übereinstimmung zwischen ihnen zu bestätigen; und
f) einer Betätigungseinrichtung um das Zugangssystem in die Lage zu versetzen, auf die Anzeige der Übereinstimmung aus der Entschlüsselungseinrichtung anzusprechen.

2. Schlüsselloses Zugangssystem nach Anspruch 1, welches weiterhin eine Aktivierungseinrichtung zum Erfassen der Gegenwart eines Gegenstandes innerhalb der Abfragezonen aufweist und die Erzeugungseinrichtung unter Ansprechen auf die Gegenwart des Gegenstandes aktiviert.

3. Schlüsselloses Zugangssystem nach Anspruch 2, wobei die Aktivierungseinrichtung einen Näherungssensor aufweist, welcher in der Nähe der abfragezone angeordnet und so ausgelegt ist, daß er einer Änderung seines elektronischen Zustandes unter Ansprechen auf die Gegenwart eines nahe daran befindlichen Gegenstandes unterliegt, sowie eine Schalteinrichtung aufweist zum Erregen der Erzeugungseinrichtung unter Ansprechen auf diese Veränderung des elektronischen Zustandes.

4. Schlüsselloses Zugangssystem nach Anspruch 1, wobei sowohl die Erzeugungs- wie auch die Erfassungseinrichtung jeweils zumindest eine Antennenspule aufweisen.

5. Schlüsselloses Zugangssystem nach Anspruch 4, wobei die Antennenspulen der Erzeugungs- und der Erfasssungseinrichtung in einer Ebene liegen.

6. Schlüsselloses Zugangssystem nach Anspruch 5, wobei die Erzeugungseinrichtung ein Paar von Antennenspulen aufweist, welche aneinander anliegend angeordnet sind und von der Erzeugungseinrichtung abwechselnd unter Phasenwirkeln von 0° und 180° relativ zueinander erregt werden.

7. Schlüsselloses Zugangssystem nach Anspruch 4, wobei das System in einem Kraftfahrzeug angeordnet ist und die Antennenspulen der Erzeugungs- und der Erfassungseinrichtungen in einem seitlichen Rückspiegel des Fahrzeuges angeordnet sind.

8. Schlüsselloses Zugangssystem mit:
a) Mitteln, welche ein Vielzahl von Abfragezonen definieren;
b) einer Erzeugungseinrichtung, welche mit jeder der Abfragezonen verbunden ist, um ein Magnetfeld mit einem Frequenzband darin zu erzeugen, wobei die Erzeugungseinrichtung eine Vielzahl von Abfragespulen aufweist, wobei zumindest eine derartige Abfragespule in je einer Abfragezone angeordnet ist;
c) einem Anzeigeelement, welches in zumindest einer der Abfragezonen anspricht und so einer beträchtlichen Veränderung seiner effektiven magnetischen Permeabilität bei einer vorgewählten Frequenz innerhalb des Frequenzbandes unterliegt, wodurch das Anzeigeelement ein Kennsignal erhält; wobei das Anzeigeelement zumindest einen Streifen aus magnetostriktivem, ferromagnetischem Material aufweist und der Streifen so ausgelegt ist, daß er magnetisch vorgespannt und dadurch bereit gemacht werden kann, bei der vorgewählten Frequenz innerhalb des Frequenzbandes des magnetischen Feldes mechanisch in Resonanz zu kommen;
d) eine Vielzahl von Erfassungseinrichtungen zur Erfassung der Resonanz des Anzeigeelementes innerhalb der Abfragezonen;
e) einer Entschlüsselungseinrichtung zum Vergleichen der Resonanz des erfaßten Anfzeigeelementes gegenüber einem vorbestimmten Code, um die Übereinstimmung zwischen ihnen zu bestätigen; und
f) einer Vielzahl von Betätigungseinrichtung, um einer Vielzahl von elektronischen Einrichtungen, welche mit dem Zugangssystem verknüpft sind, das Ansprechen auf die Anzeige der Übereinstimmung aus der Entschlüsselungseinrichtung zu ermöglichen.

9

9. Schlüsselloses Zugangssystem nach Anspruch 8, welches weiterhin eine Vielzahl von Aktivierungseinrichtungen zum Erfassen der Gegenwart eines Gegenstandes innerhalb jeder der Abfragezonen aufweist und die Erzeugungseinrichtung unter Ansprechen auf die Gegenwart des Gegenstandes aktiviert.

10. Schlüsselloses Zugangssystem nach Anspruch 9, wobei jeder der Aktivierungseinrichtungen einen Näherungssensor aufweist, welcher in der Nähe je einer anderen der Abfragezonen angeordnet und so ausgelegt ist, daß er einer Veränderung des elektronischen Zustandes unter Ansprechen auf die Gegenwart eines in seiner Nähe befindlichen Gegenstandes unterliegt, sowie eine Schalteinrichtung aufweist, zum Erregen der Erzeugungseinrichtung unter Ansprechen auf die Veränderung des elektronischen Zustandes.

**Revendications**

1. Système d'entrée sans clé, comprenant:

(a) un moyen pour définir des zones d'interrogation;

(b) un moyen de génération pour produire un champ magnétique ayant une bande de fréquence à l'intérieur de la zone d'interrogation, le moyen de génération comportant une bobine d'interrogation;

(c) un marqueur répondant à l'intérieur d'au moins l'une des zones d'interrogation pour subir un changement important de sa perméabilité magnétique effective à une fréquence présélectionnée à l'intérieur de la bande de fréquence qui fournit au marqueur une identité par signal, le marqueur comprenant au moins une bande de matériau ferromagnétique, magnétostrictif, la bande étant destinée à être sollicitée magnétiquement et par conséquent armée pour résonner mécaniquement à la fréquence présélectionnée dans la bande de fréquence du champ magnétique;

(d) un moyen de détection pour détecter la résonance du marqueur à l'intérieur des zones d'interrogation;

(e) un moyen de décodage pour comparer la résonance détectée du marqueur à une code prédéfini afin de vérifier la partié entre eux; et

(f) un moyen d'actionnement pour valider le système d'entrée en répsonse à une indication de la parité en provenance du moyen de décodage.

2. Système d'entrée sand clé selon la revendication 1, comprenant en outre un moyen d'activation pour détecter la présence d'un objet à l'intérieur des zones d'interrogation, et activer le moyen de génération en réponse à la présence de l'objet.

3. Système d'entrée sans clé selon la revendication 2, dans lequel le moyen d'activation comprend un détecteur de proximité disposé dans le voisinage de la zone d'interrogation et destiné à subir un changement de l'état électronique en réponse à la présence d'un objet dans son voisinage, et un moyen de commutation pour exciter le moyen de génération en réponse au changement de l'état électronique.

4. Système d'entrée sans clé selon la revendication 1, dans lequel le moyen de génération et le moyen de détection comprennent chacun au moins une bobine d'antenne.

5. Système d'entrée sans clé sslon la revendication 4, dans lequel les bobines d'antenne du moyen de génération et du moyen de détection sont dans le même plan.

6. Système d'entrée sans clé selon la revendication 5, dans lequel le moyen de génération comprend une paire de bobines d'antenne disposées en étant contiguës et commandées par le moyen de génération de façon alternative à des angles de phase de 0° et 180° l'une par rapport à l'autre.

7. Système d'entrée sans clé selon la revendication 4, dans lequel le système est disposé dans un véhicule automobile et les bobines d'antenne du moyen de génération et du moyen de détection sont placées dans le rétroviseur latéral du véhicule.

8. Système d'entrée sans clé, comprenant:

(a) un moyen pour définir une multitude des zones d'interrogation;

(b) un moyen de génération associé à chacune des zones d'interrogation pour générer un champ magnétique ayant une bande de fréquence, le moyen de géneration comprenant une multitude de bobines d'interrogation, au moins l'une des bobines d'interrogation étant disposée à l'intérieur de chacune des zones d'interrogation;

(c) un marqueur répondant à l'intérieur d'au moins l'une des zones d'interrogation pour subir un changement important de sa perméabilité magnétique effective à une fréquence présélectionnée à l'intérieur de la bande de fréquence qui confère au marqueur une identité par signal, le marqueur comprenant au moins une bande de matériau magnétostrictif, ferromagnétique, la bande étant destinée à être sollicitée magnétiquement et par conséquent à être armée pour résonner mécaniquement à la fréquence présélectionnée dans la bande de fréquence du champ magnétique;

(d) une multitude de moyens de détection pour détecter la résonance du marqueur à l'intérieur des zones d'interrogation;

(e) un moyen de décodage pour comparer la résonance détectée du marqueur à un code prédéfini afin de vérifier la parité entre eux; et

(f) une multitude de moyens d'actionnement pour valider une multitude de dispositifs électroniques associée au système d'entrée en réponse à une indication de la parité en provenance du moyen de décodage.

9. Système d'entrée sans clé selon la revendication 8, comprenant en outre une multitude de moyens d'activation pour détecter la présence d'un objet à l'intérieur de chacune des zones d'interrogation et activer le moyen de génération en réponse à la présence de l'objet.

10. Système d'entrée sans clé selon la revendication 9, dans lequel chacune des moyens d'activation comprend un détecteur de proximité disposé dans le voisinage d'une zone différente des zones d'interrogation et destiné à subir un changement de l'état électronique en réponse à la présence d'un objet dans son voisinage, et un moyen de commutation pour exciter le moyen de génération en réponse au changement de l'état électronique.

FIG. 1

10
15
20
30

FIG. 2

61
62
40
50
45
60

FIG. 3

70
80
90

44
18
62
16

FIG. 5

1

FIG. 4

EP 0 153 613 B1

FIG. 6

# FIG. 7

# F I G. 8